# FASCICULE DE BREVET EUROPEEN

(11) **EP 0 403 999 B1**
(45) Date de publication et mention de la délivrance du brevet: **14.12.1994**
(21) Numéro de dépôt: 90111422.3
(22) Date de dépôt: 18.06.1990
(51) Int. Cl.: H04M 7/00

(54) **Joncteur de ligne réseau analogique pour installation téléphonique de type privé**
Analoge Verbindungsschaltung für eine Fernsprechnebenstellenanlage
Line junction for analogue network lines for a private telephone installation

(30) Priorité: 19.06.1989 FR 8908116
(43) Date de publication de la demande: 27.12.1990
(73) Titulaire: ALCATEL BUSINESS SYSTEMS, F-75008 Paris (FR)
(72) Inventeur: Blaszykowski, Raymond, F-95100 Argenteuil (FR); Girard, Robert, F-92700 Colombes (FR); Bonvallet, André, F-92600 Asnières (FR)
(74) Mandataire: Weinmiller, Jürgen

(56) Documents cités:
- EP-A- 0 238 972
- FR-A- 2 361 025
- GB-A- 1 591 869
- US-A- 3 930 127
- US-A- 4 440 979

## Description

L'invention concerne un joncteur de ligne réseau analogique pour installation téléphonique de type privé selon le préambule de la revendication 1. Un tel joncteur est connu, voir par exemple US-A-4 440 979.

Les joncteurs de ligne réseau sont des équipements assurant le raccordement du commutateur ou du système d'intercommunication d'une installation téléphonique de type privé à un central de rattachement appartenant usuellement à un réseau téléphonique, de manière à permettre la communication des postes ou terminaux téléphoniques rattachés à l'installation privée considérée avec ceux qui sont reliés au réseau sans être rattachés à cette installation.

Actuellement un grand nombre de lignes réseau sont encore de type analogique et assurent la transmission des signaux de parole sous forme analogique par l'intermédiaire de deux fils dans une bande de fréquences audibles comprises entre trois cents et trois mille quatre cents hertz. Ces lignes permettent également la transmission de données numériques qui sont alors transcodées pour pouvoir être transmises dans la bande de fréquences définie ci-dessus par exemple par codage bi ou multi-fréquentiel. Les deux fils de ligne sont aussi exploités pour transmettre des signalisations par exemple par modification d'impédance ou sous forme de tension, de courant ou d'impulsions à fréquences déterminées.

Or les centraux téléphoniques de type privé, actuels, tendent à assurer le plus souvent une commutation de type temporel qui conduit au codage des signaux de parole sous forme numérique et qui est bien adaptée à la transmission simultanée de signaux de voix et/ou de données par les mêmes supports selon les besoins présents des utilisateurs.

L'invention propose donc un joncteur de ligne réseau analogique pour installation privée, de type temporel, qui soit fiable, peu coûteux et peu encombrant.

Un tel joncteur est défini par la revendication 1. En ce qui concerne des exemples de mise en oeuvre préférée, référence est faite aux revendications secondaires.

L'invention sera décrite ci-après en détail à l'aide d'une mise en oeuvre préférée en liaison avec les figures répertoriées ci-dessous.

La figure 1 présente un exemple de joncteur de ligne réseau analogique pour installation téléphonique de type temporel.

Les figures 2A, 2B, 2C présentent un exemple de réalisation du joncteur de ligne réseau schématisé en figure 1.

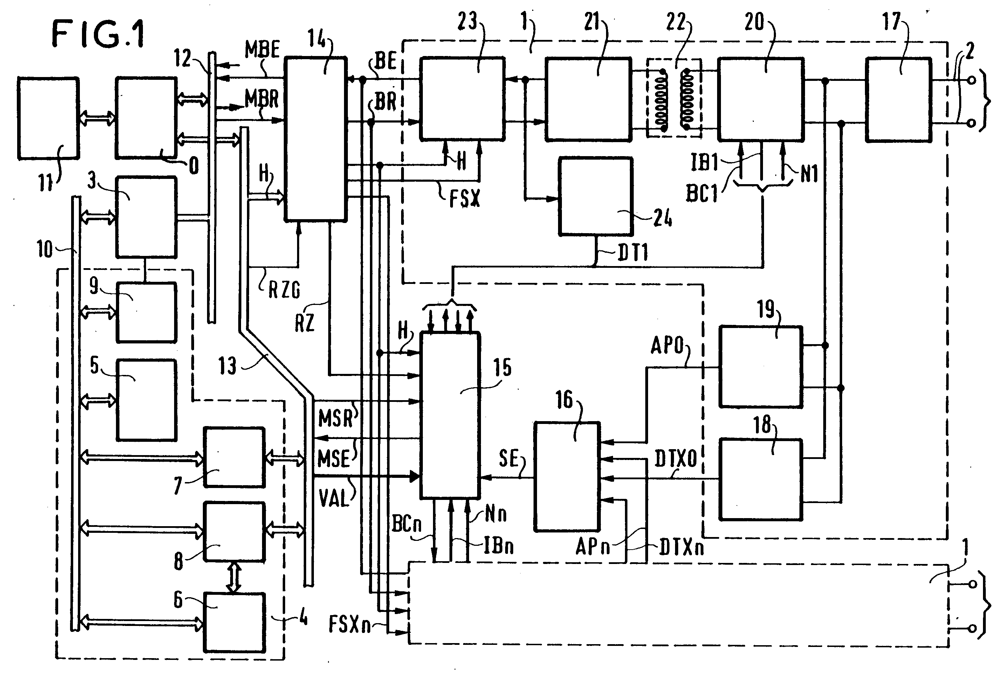

Les joncteurs de ligne réseau 1 montrés en figure 1 sont destinés chacun à relier une installation téléphonique privée, dont ils font partie, à une ligne téléphonique 2, dite réseau, de type analogique aboutissant à un central téléphonique de rattachement, non représenté, qui est le plus souvent intégré dans un réseau selon un arrangement connu. A cet effet, le joncteur 1 vient classiquement se raccorder aux deux fils "a, b" de la ligne 2, il est classiquement associé à d'autres joncteurs 1, qui desservent la même installation et qui sont individuellement connectés à autant de lignes réseau 2.

L'installation téléphonique temporelle dans laquelle sont incorporés les joncteurs 1, comporte classiquement un réseau de connexion numérique 3, constitué par une matrice de commutation temporelle qui est par exemple apte à interconnecter huit multiplex bidirectionnels disposant chacun de trente-deux voies temporelles à débit de 64 kbit/s. Ce réseau de connexion est piloté par une unité de commande 4, classiquement organisée autour d'au moins un processeur 5, d'un ensemble de mémoires 6, vives et/ou mortes, et d'une horloge 7. Dans l'exemple proposé, l'unité de commande 4 comporte aussi des auxiliaires centralisés, notamment un circuit de conversion série-parallèle 8 et une unité 9 d'auxiliaires de signalisation, générateurs ou récepteurs.

Un bus multifilaire 10 relie entre eux les divers éléments constitutifs de l'unité de commande 4, il permet aussi la commande du réseau de connexion 3.

Dans l'installation présentée, les joncteurs 1 desservant les lignes téléphoniques 2, les divers circuits 11 de raccordement des postes ou terminaux téléphoniques d'abonné ou de lignes particulières -par exemple des liaisons interautos-, sont reliés au réseau de connexion 3 par au moins un multiplex 12 permettant la transmission bidirectionnelle des octets des signaux numériques de voix et /ou de données. Dans une forme de réalisation, sept liaisons multiplexes bifilaires voix-données MBE, MBR supportant chacune 32 voies temporelles, desservent les terminaisons téléphoniques que constituent les circuits de raccordement 11 et les joncteurs 1, une liaison multiplexe supplémentaire desservant dans un sens les générateurs et dans l'autre les récepeteurs qui constituent l'unité 9 d'auxiliaires de signalisation.

Un multiplex supplémentaire 13 assure les échanges de signalisation dans l'installation, il relie ici les joncteurs 1, les circuits 11 et le circuit de conversion 8 entre eux. Il est constitué par une liaison bifilaire dont l'exploitation est partagée temporellement par les éléments qui l'utilisent sous le contrôle de l'horloge 7. Le circuit de conversion 8 assure la sérialisation des informations fournies sous forme parallèle par l'unité de commande 4 via le bus 10 et la parallèlisation des informations fournies sous forme série à cette unité de commande par le multiplex de signalisation 13. Les circuits de raccordement 11 ne sont pas précisés ici dans la mesure où usuels et susceptibles d'être très divers, ils n'ont pas de rapport direct avec l'invention.

Dans une forme de réalisation, le multiplex de signalisation 13 a un débit de 2 mégabit/s et permet de disposer de 256 voies temporelles au cours d'une trame, sur chacun de ces deux fils MSR, MSE, l'un transmettant les commandes individuelles émanant de l'unité de commande 4, via le circuit de conversion 8, et l'autre les résultats d'observation transmis via ce même circuit de conversion vers cette unité de commande par les circuits de raccordement 11 et les joncteurs 1 qui disposent de voies temporelles individuelles.

Chacune des terminaisons que constituent les circuits 11 et les joncteurs 1 fournit, cycliquement au cours d'une trame, une information précisant son type par la voie temporelle qui lui est affectée.

Chaque terminaison est reliée par une interface logique 0 au multiplex 12 et au multiplex 13 qui la desservent, cette interface 0 comporte essentiellement un circuit de synchronisation 14 pour les échanges via la liaison multiplexe voix-données MBE-MBR auquel ce joncteur est relié et un circuit de signalisation 15; ces deux circuits 14 et 15 sont ici communs à plusieurs joncteurs 1 reliés à une même liaison multiplexe voix-données.

Dans une forme de réalisation, chaque circuit de synchronisation 14 sert d'interface entre un nombre "n", d'ici huit joncteurs 1, et une liaison multiplexe voix-données MBE, MBR et traite à leur profit d'une part l'émission, d'autre part la réception des octets voix-données dans les voies temporelles qui leur sont réservées sur ladite liaison. Deux liaisons H,RZG issues de l'unité de commande 4, fournissent respectivement l'une, les divers signaux d'horloge classiquement nécessaires que génère l'horloge 7 et l'autre un classique signal de remise à l'état initial.

De même chaque circuit de signalisation 15 dessert un groupe de "n" joncteurs 1 reliés à un même circuit de synchronisation, il émet et reçoit les données de signalisation que véhiculent pour eux les deux fils MSE, MSR dans les voies temporelles qui leur sont individuellement réservées sur le multiplex de signalisation 13. Les données de signalisation reçues de l'unité de commande 4 sont transmises bit par bit par le circuit de signalisation 15 aux "n" joncteurs 1 concernés, via des liaisons individuelles telles que BC1 et N1 ou BCn et Nn; d'autres données de signalisation sont fournies soit directement par les joncteurs par exemple via les liaisons IB1 ou IBn, soit au travers d'un multiplexeur 16 commun, via des liaisons telles que AP1 et DTX1 ou APn et DTXn.

Chaque circuit de signalisation 15 est sélectivement adressable par l'unité de commande 4 via une liaison de validation Val, ici trifilaire qui permet la sélection du circuit, celle des instants d'échange de signalisation pour les "n" joncteurs ainsi que celle des trames où sont alternativement émises les données de signalisation, puis les informations relatives au type des joncteurs. Les signaux nécessaires au fonctionnement qui sont transmis par la liaison d'horloge H et par une liaison de remise à l'état initial RZ sont ici obtenus par l'intermédiaire du circuit de synchronisation 14 associé.

Le joncteur de ligne réseau analogique 1 est classiquement relié aux deux fils de la ligne téléphonique 2 par un dispositif 17 de protection contre les surtensions que la ligne est susceptible de transmettre accidentellement. Un détecteur de taxes 18, un détecteur d'appel 19 et un boucleur 20 sont connectés en parallèle aux deux fils de la ligne téléphonique 2, via le dispositif de protection 17, dans chaque joncteur 1. Les signaux caractéristiques de détection d'appel ou de taxe, qui sont fournis par les détecteurs 18 et 19, sont transmis sous forme numérique au circuit de signalisation 15 associé, via le multiplexeur 16 correspondant qui les reçoit sur deux entrées séparées.

Le boucleur 20 comporte essentiellement un détecteur de polarité, signalant au circuit de signalisation 15 par un signal binaire IB, tel IB1, les inversions de polarité qui sont appliquées sur la ligne téléphonique 2 par le central de rattachement auquel cette ligne aboutit, il comporte aussi un circuit de commande de bouclage de ligne et de numérotation par ouverture de ligne qui fournit un signal BC, tel BC1, et un circuit de régulation de l'intensité du courant de ligne, ces circuits n'étant pas représentés sur la figure 1.

Un circuit 21 adapteur d'impédance et séparateur 2 fils/4 fils est relié aux fils de ligne téléphonique 2 au travers du dispositif de protection 17, du boucleur 20 et d'un transformateur 22 en série. Ce circuit 21 fait lui-même la liaison entre le transformateur 22 et d'une part un circuit cofidec 23 relié au circuit de synchronisation 14 qui dessert le joncteur 1 dont il fait partie, d'autre part un détecteur de tonalités 24 du joncteur 1. Le transformateur 22 assure classiquement un isolement galvanique entre les circuits reliés à l'un de ses deux enroulements et ceux qui sont reliés à l'autre, il assure par contre la transmission bidirectionnelle des signaux alternatifs, notamment ceux situés dans la bande téléphonique.

Le circuit 23 est un classique unité de codage-filtrage et décodage assurant la conversion en signaux analogiques transmissibles par la ligne téléphonique 2 des signaux numériques communiqués sous forme d'octets par le circuit de synchronisation 14 associé, via la liaison multiplexe temporelle formée par le fil BE lui-même connecté au fil MBE du multiplex 12, ainsi que la conversion en signaux numériques des signaux analogiques fournis par la ligne téléphonique 2 en vue de leur transmission successive par les fils BR et MBR. A cet effet le circuit 23 reçoit classiquement des signaux d'horloge, via la liaison H et un signal de sélection de voie temporelle ou autrement dit d'intervalle de temps de voie FSX, via une liaison individuelle, telle que FSX1 pour le circuit 1, de manière à pouvoir effectuer les transmissions dans lesquelles il est impliqué.

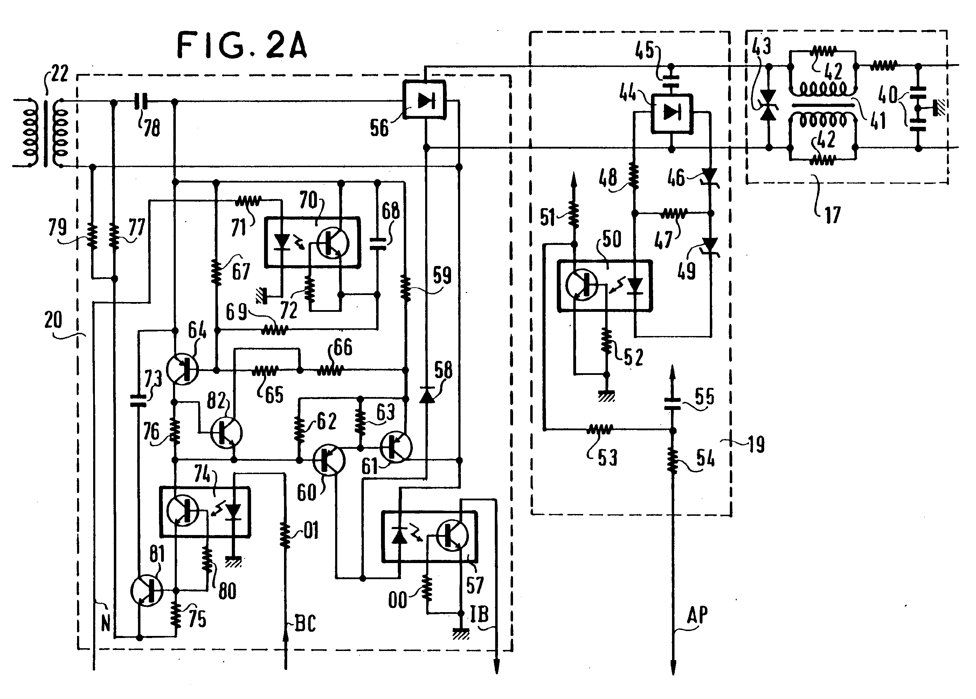

Les figures 2A à 2C permettent de préciser la constitution d'un joncteur de ligne réseau analogique selon l'invention.

Comme indiqué plus haut, un joncteur 1 est relié par un dispositif de protection 17 aux fils A,B d'une ligne téléphonique 2 aboutissant à un central de rattachement non représenté. Ce dispositif 17 comporte par exemple deux condensateurs 40 de même capacité en série entre les fils A,B en aval de deux circuits selfiques situés chacun sur un des deux fils, chaque circuit selfique comportant l'un des deux enroulements d'un transformateur 41 et une résistance 42 montée en parallèle à chacun des enroulements, une diode antisurtension 43 située entre les fils en aval des circuits selfiques complète classiquement le dispositif.

Les condensateurs 40 et les circuits selfiques protègent le joncteur vis-à-vis des radio-fréquences, la diode 43 et les condensateurs 40 protègent le joncteur et les circuits en aval contre les surtensions éventuellement transmises par la ligne.

Le détecteur d'appel 19, monté en parallèle sur les fils de ligne téléphonique 2 en aval du dispositif de protection 17, est classiquement destiné à détecter les courants d'appel cadencés, par exemple de fréquence 25 ou 50 Hz reçus au travers de la ligne 2 et à les convertir en signaux logiques de type binaire AP, tel AP0, de même cadence au profit de l'unité de commande 4 régissant le joncteur 1. Le détecteur d'appel 19 comporte aussi un pont redresseur à diodes 44 alimenté au travers des fils de ligne 2, via un condensateur 45 connecté au fil A pour éviter la transmission de la composante continue des signaux transmis par la ligne.

La composante alternative redressée par le pont 44 à partir des signaux en ligne 2 est appliquée en entrée d'un circuit à deux mailles. La première maille comporte une première diode Zener 46 et deux résistances 47,48 alimentées, en série et dans le sens inverse pour la diode, par le courant redressé que fournit le pont 44. La seconde maille comporte en série, aux bornes de la résistance médiane 47, une seconde diode Zener 49, elle-même en série avec la première, et la diode d'un photocoupleur 50 qui est montée en inverse par rapport aux diodes Zener.

Le transistor photocommandé du photocoupleur 50 est de type NPN, fournit un signal de sortie bien adapté à la commande de composants en technologie HC-MOS, son collecteur est relié au potentiel positif d'alimentation +5V par une résistance 51 et sa base est polarisée par une résistance 52, l'une et l'autre de très grandes valeurs. Le courant dans la diode du photocoupleur 50 est en conséquence de très faible valeur ce qui permet d'améliorer la précision de la détection, celle-ci étant déclenchée par franchissment d'un seuil Zener, au lieu d'être obtenue en exploitant le gain de l'étage photocoupleur.

Le signal de détection d'appel fourni par le joncteur est prélevé par une liaison AP au niveau du collecteur du transistor de photocoupleur 50, via deux résistances 53,54 en série dont le point commun est relié au potentiel +5V par un condensateur 55, selon un montage classique.

Le boucleur 20 comporte un pont redresseur à diodes 56 branché entre les fils A,B de ligne, en aval du dispositif de protection 17 et en parallèle sur le pont 44. Un premier montage inclus dans ce boucleur permet de détecter les inversions d'alimentation appliquées par le central de rattachement aux fils A,B de la ligne téléphonique 2. Ce montage comporte une première boucle reliant le fil B à la borne alimentée négative du pont redresseur 56 par une diode d'un photocoupleur 57 dont la cathode est reliée à la dite borne alimentée négative et par une seconde diode 58 connectée par sa cathode au fil B et par son anode à celle de la diode du photocoupleur 57. Ce dernier isole galvaniquement les circuits situés en amont de lui par rapport à ceux qui sont situés en aval, soit pratiquement la ligne téléphonique vis-à-vis du joncteur et de l'installation qui le comportent.

Une seconde boucle comporte une résistance 59 qui est reliée à la borne alimentée positive du pont 56 et qui alimente un montage Darlington composé de deux transistors 60,61 associés à deux résistances 62,63 polarisant chacune la base de l'un des transistors; les collecteurs de ces transistors sont de plus interconnectés par la diode du photocoupleur 57.

Lorsque l'alimentation fournie par la ligne est normale, la diode 58 est à l'état bloqué et la diode du photocoupleur 57 est traversée par un courant obtenu de la ligne. Lorsque l'alimentation de la ligne est inversée, le courant issu de la ligne passe au travers de la diode 58, le photocoupleur qui n'est pas correctement alimenté est alors inactif.

Le signal d'inversion d'alimentation fourni par le joncteur est prélevé par une liaison IB au niveau du collecteur du transistor du photocoupleur 57, dont la base est classiquement polarisée par rapport au potentiel de masse par l'intermédiaire d'une résistance 00.

Le courant de ligne consommé par le joncteur 1 est essentiellement celui qui traverse la résistance 59 et le montage Darlington évoqué ci-dessus, une régulation de ce courant est réalisée par action d'un montage associant un transistor 64, de type PNP, relié par son émetteur à la borne alimentée positive du pont 56, par son collecteur à la base du transistor 60 et par sa propre base au collecteur du transistor 61, via deux résistances 65, 66 en série. L'augmentation du courant de ligne augmente la tension aux bornes de la résistance 59 et entraîne la conduction du transistor 64 au dessus d'une tension de seuil déterminée ce qui tend à bloquer le montage Darlington.

Une éventuelle augmentation de la valeur de régulation du courant de ligne est possible à obtenir par adjonction d'une résistance 67 entre la borne alimentée positive du pont 56 et la base du transistor 64.

Une éventuelle augmentation de la valeur du courant de ligne pendant la prise de ligne et la numérotation est également possible à obtenir par adjonction d'un condensateur 68 en série avec une résistance 69 en parallèle sur la résistance 67. Le point commun à ce condensateur 68 et à cette résistance 69 est relié à cet effet à l'émetteur du transistor, de type NPN, d'un photocoupleur 70 susceptible d'être commandé par l'unité de commande 4, par exemple par logiciel, via le circuit de signalisation 15 desservant le joncteur et une liaison N apte à alimenter la diode du photocoupleur 70 au travers d'une résistance 71. Une résistance 72 assure la polarisation de la base du transistor du photocoupleur 70.

Un blocage du passage à basse impédance de courants basse fréquence dans le boucleur évoqué ci-dessus, lorsque le courant n'est par régulé, est aussi réalisé par adjonction d'un condensateur 73 entre la borne positive alimentée du pont 56 et le collecteur d'un transistor 81, de type NPN, dont la base est reliée à l'émetteur du transistor d'un photocoupleur 74 disposé de manière à couper ou non le courant de base du transistor 60 du montage Darlington. A cet effet, le collecteur du transistor du photocoupleur 74 est relié à la base du transistor 60, alors que l'émetteur de ce transistor, de type NPN, du photocoupleur est relié aux bornes alimentées du pont 56, via d'une part une résistance 77 et un condensateur 78 pour la borne positive et d'autre part une résistance 79 pour la borne négative; une résistance de polarisation 80 relie classiquement la base et l'émetteur du transistor du photocoupleur 74. Un signal de bouclage BC, également exploité pour la prise de ligne, la numérotation et les arrêts d'appel, commande la diode du photocoupleur 74, il émane du circuit de signalisation 15 desservant le joncteur 1 considéré.

Dans la réalisation proposée, le transistor 81, de type NPN, permet de déconnecter le condensateur 73 pendant les phases de numérotation de manière à éliminer son influence et à maintenir sa charge lors des ouvertures de ligne pendant ces phases. Ce transistor 81 est connecté par son collecteur au condensateur 73 et par son émetteur au point commun aux résistances 77 et 79, sa base étant reliée au point commun à une résistance 75 de polarisation du transistor du photocoupleur 74 et à l'émetteur de ce transistor, de manière à n'être conducteur que lorsque le photocoupleur 74 est lui-même actif. Lorsque la boucle est fermée, une protection contre les surcharges en tension est obtenue par insertion d'un transistor 82, de type PNP; ce dernier met en liaison par son collecteur le point commun à une résistance 76 de polarisation de sa propre base et au collecteur du transistor du photocoupleur 74 avec celui qui est commun aux résistances 65 et 66, via son émetteur, lorsque la tension mesurée aux bornes de la résistance 76 est trop forte, la base du transistor 82 étant reliée au point commun au collecteur du transistor 64 et à la résistance 76.

Un enroulement du transformateur 22 d'isolement relie entre eux les fils reliés aux bornes alimentées du pont 56 au dela du condensateur 78 de blocage de composante continue et des points de connexion des résistances 77 et 79.

Un second enroulement du transformateur 22 relie le circuit cofidec 23 et le détecteur de tonalités 24 à la ligne téléphonique 2, via le circuit 21 adaptateur d'impédance et séparateur 2 fils/4 fils, comme indiqué sur la figure 1.

Ce circuit 21, de type classique, est relié au second enroulement du transformateur 22, via un circuit de protection contre les surtensions classiquement composé d'un condensateur 83 en parallèle avec deux diodes Zener 84,85 reliées entre elles par leurs cathodes et raccordées chacune par son anode à l'une des extrémités dudit second enroulement, l'une d'entre elles étant de plus reliée au potentiel de masse par cette anode, de même que l'une des bornes de l'enroulement.

Le circuit 21 est réalisé à base d'amplificateurs opérationnels, deux amplificateurs 86,87 sont respectivement placés l'un dans la voie d'émission vers le circuit cofidec 23, l'autre dans la voie réception des signaux analogiques produits par ce circuit cofidec 23. Un équilibreur 88, classiquement à base de résistances et de condensateurs, permet d'adapter le joncteur 1 aux différentes lignes auquel il est susceptible d'être relié. Les amplificateurs 86 et 87, dont les entrées non inverseuses sont à la masse, sont classiquement reliés au point commun au transformateur 22, à la cathode de la diode Zener 84 et au condensateur 83, le premier par son entrée inverseuse et via une résistance 90, le second par sa sortie et via une résistance 95.

L'équilibreur 88 est classiquement relié aux amplificateurs 86 et 87, d'une part à l'entrée inverseuse du premier par une résistance 91, d'autre part à la sortie du second, la sortie de chacun de ces deux amplificateurs est bouclée sur l'entrée inverseuse correspondante, via une résistance 89 ou 93, la sortie du second étant de plus reliée à la masse par un circuit à résistance 94 et condensateur 96 en série.

Un filtre supplémentaire d'élimination des signaux à fréquence de taxation est inséré entre la sortie de l'amplificateur 86 et l'entrée série correspondante du circuit coficec 23 pour éviter la prise en compte de signaux à fréquence de taxation par le circuit cofidec. Ce filtre comporte ici deux fortes résistances 99,101 en série dont le point commun est relié d'une part à une diode 100 dont la cathode est à la masse, d'autre part à une entrée inverseuse d'un amplificateur opérationnel du circuit cofidec 23, cet amplificateur ayant sa sortie rebouclée sur son entrée non-inverseuse, cette dernière étant connectée entre les résistances 99,101 par une capacité 98.

Le circuit cofidec est de type classique, c'est par exemple un modèle TP 3057 de la Société NATIONAL SEMICONDUCTORS à entrée et sortie série.

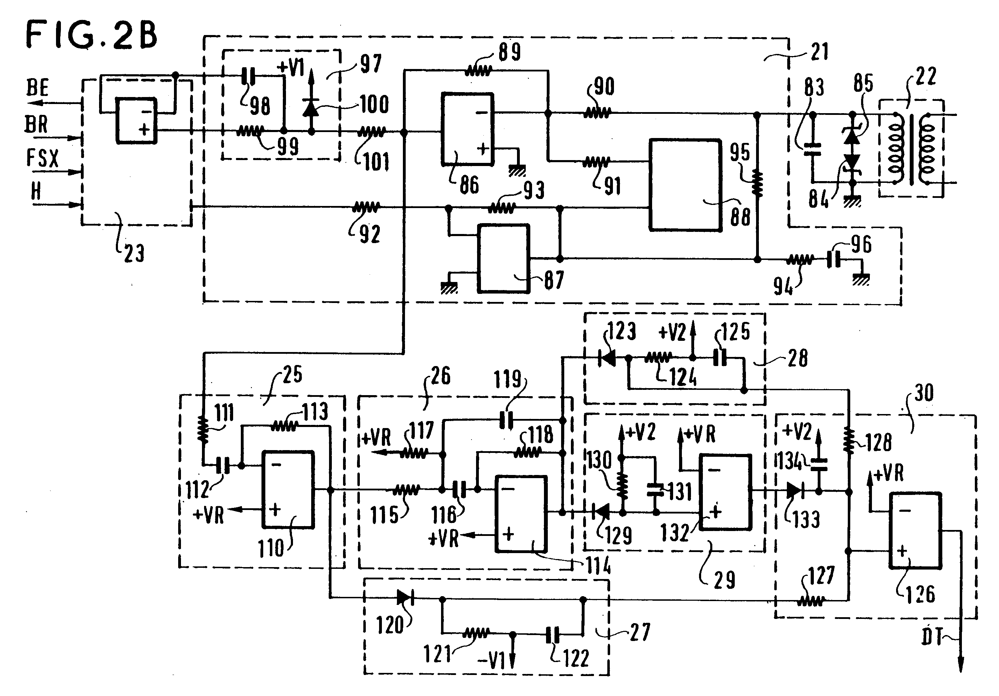

Le détecteur de tonalité 24 de la figure 1 est destiné à capter la tonalité d'invitation à numéroter qui est par exemple transmise sous forme d'un signal sinusoïdal situé dans la bande de fréquences comprise entre 300 et 500 Hz. Ce détecteur de tonalité comporte un amplificateur 25 à seuil minimum d'entrée -figure 2B-, qui est composé d'un amplificateur opérationnel 110 relié par son entrée inverseuse à la sortie de l'amplificateur 186, via une résistance 111 et une capacité 112; l'entrée non-inverseuse de cet amplificateur opérationnel est reliée à un potentiel de référence +VR, médian, permettant de profiter de toute la dynamique disponible et d'éviter l'écrètage du signal reçu.

Une résistance 113 reboucle classiquement la sortie de cet amplificateur opérationnel 110 sur son entrée inverseuse. Un filtre passe-bande 26 amplifie les signaux situés dans la bande comprise entre 300 et 500 Hz et atténue les signaux dont la fréquence estsupérieure à 600 Hz ou inférieure à 160 Hz. Ce filtre qui est par exemple du premier ordre est centré sur la fréquence de la tonalité attendue, il est organisé autour d'un amplificateur opérationnel 114 dont l'entrée inverseuse est reliée à la sortie de l'amplificateur 110, via une résistance 115 en série avec un condensateur 116, l'entrée non-inverseuse étant au potentiel +VR.

Le point commun à la résistance 115 et au condensateur 116 est lui même relié au potentiel +VR par une résistance 117, la sortie de l'amplificateur 114 réagit sur son entrée inverseuse via d'une part une résistance 118, d'autre part un condensateur 119 relié au point commun aux résistances 115,117 et au condensateur 116.

Une première cellule de redressement-filtrage 27, est reliée à la sortie de l'amplificateur 110 par une diode 120 connectée à cette sortie par son anode; elle comporte une grande résistance 121 et un condensateur 122 en parallèle entre la cathode de la diode 120 et un potentiel négatif d'alimentation -V1, ceci permet un stockage des valeurs maximales des alternances positives du signal appliqué à l'entrée du filtre passe-bande.

Une seconde cellule de redressement-filtrage 28 est reliée en sortie de l'amplificateur 114 par la diode 123 dont la cathode est reliée à cette sortie, elle comporte une résistance 124 et un condensateur 125 en parallèle entre l'anode de la diode 123 et un potentiel positif d'alimentation +V2. Cette seconde cellule permet le stockage des valeurs maximales négatives du signal présent en sortie du filtre passe-bande.

Les signaux en sortie des deux cellules 27,28 sont appliqués à un comparateur 30, ou plus précisément à l'entrée non-inverseuse d'un amplificateur opérationnel 126 de ce comparateur, via deux grandes résistances 127, 128 desservant respectivement chacune une cellule. L'entrée inverseuse de l'amplificateur 126 est reliée au potentiel +VR.

La présence d'un signal en sortie de filtre ayant un niveau clairement supérieur au niveau du signal pris en entrée est considérée comme caractéristique de la présence de la tonalité à détecter, à partir du moment où le niveau de ce signal en sortie est supérieur à un niveau minimal déterminé qui est fixé par un détecteur de présence à seuil 29 connecté en sortie du filtre passe-bande 26, comme la seconde cellule 28.

Le détecteur de présence à seuil 29, comporte une cellule redressement-filtrage composée d'une diode 129 dont la cathode est reliée à la sortie de l'amplificateur 114, ainsi que d'une résistance 130 et un condensateur 131 en parallèle entre l'anode de la diode 129 et le potentiel +V2. La sortie de cette cellule qui est le point commun à l'anode de la diode 129, à la résistance 130 et au condensateur 131, est reliée àl'entrée non-inverseuse d'un amplificateur opérationnel 132 dont l'entrée inverseuse est au potentiel +VR.

L'amplificateur 132 est relié par une diode 133 à l'entrée non-inverseuse de l'amplificateur 126, de même que les résistances 127 et 128 placées en sortie des cellules 27 et 28.

Tant que le signal en sortie du filtre passe-bande est inférieur à une valeur de seuil fixée par la diode 129, le signal en sortie de l'amplificateur 126 est fixé par celui de l'amplificateur 132 et se traduit par un signal binaire opposé à celui qui est caractéristique de la présence d'une tonalité sur la liaison DT.

Lorsque le signal en sortie de filtre passe-bande, c'est à dire en sortie d'amplificateur 114, dépasse le niveau de seuil fixé par la diode, l'amplificateur 126 bloque la diode 133 en inverse et le signal appliqué à l'entrée non-inverseuse de l'amplificateur 126 est la somme des signaux de polarités opposées fournis par les cellules 27 et 28, via les résistances 127 et 128. Un signal binaire caractéristique de détection de tonalité est alors produit sur la liaison DT si la valeur des signaux en sortie des résistances 127,128 traduit l'existence d'un signal filtré d'amplitude supérieure à celle du signal appliqué en entrée de filtre.

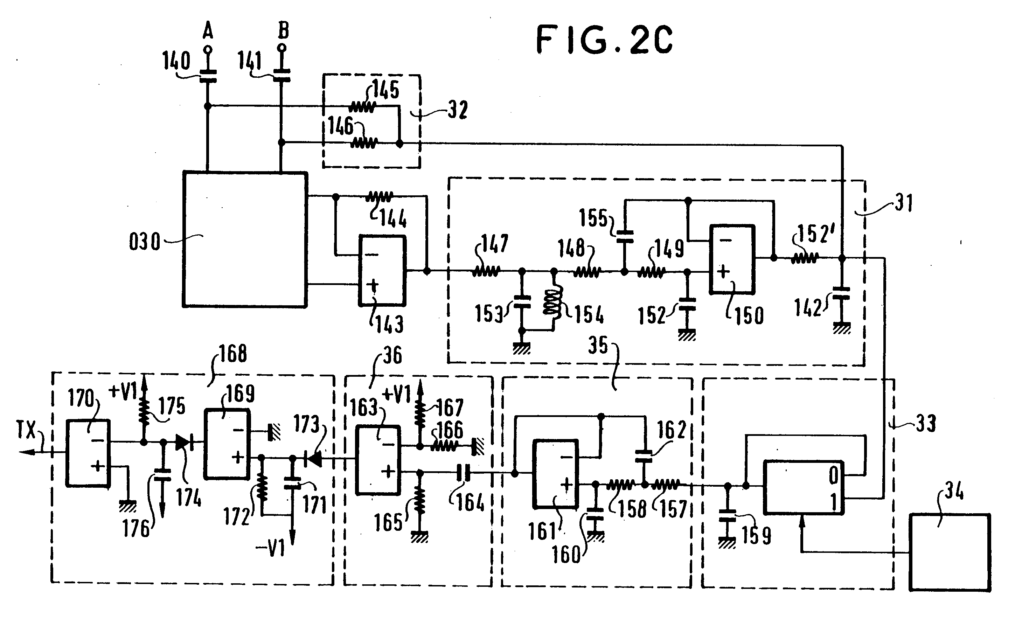

Le détecteur de taxe 18 de la figure 1, qui est détaillé en figure 2C, est conçu pour être raccordé aux fils A,B de la ligne téléphonique 2 en aval du dispositif de protection 17 et via deux condensateurs 140 et 141 d'élimination de composante continue.

Un montage atténuateur 030, non décrit ici car classique et non caractéristique de l'invention, est relié aux fils A,B via les condensateurs 140 et 141, il attaque un filtre d'entrée 31, via un amplificateur 143 dont la sortie est classiquement rebouclée sur l'entrée inverseuse, via une résistance 144.

Le filtre d'entrée 31, moyennement sélectif, est centré sur la fréquence Ft de la signalisation très basse fréquence de taxation qui est classiquement transmise en différentiel par le central de rattachement, via les deux fils A,B de la ligne 2. Classiquement ces signaux impulsionnels de taxation, qui sont transmis en mode différentiel, sont de fréquence Ft égale à 12 ou 16 kHz. Alternativement la signalisation est susceptible d'être transmise en mode commun sous forme d'impulsions de fréquence dite extrèmement basse, classiquement à la fréquence de 50 Hz qui sont prises en compte par un transmetteur d'impulsions 32 connecté aux condensateurs 140 et 141 en parallèle avec le filtre d'entrée.

Ce transmetteur d'impulsions 32 comporte deux résistances 145 et 146, égales, qui sont reliées d'une part entre elles à une de leurs extrémités et d'autre part chacune à l'un des fils A,B.

Le filtre d'entrée 31 centré sur la fréquence Ft est ici composé de trois résistances 147, 148 et 149 en série en amont de l'entrée non-inverseuse d'un amplificateur opérationnel 150, qui est de plus reliée au potentiel de masse par un condensateur 152. Le point commun aux résistances 147 et 148 est relié au potentiel de masse par un circuit à condensateur 153 et inductance 154 en parallèle, la sortie de l'amplificateur 150 est ramenée d'une part sur son entrée inverseuse, d'autre part au point commun aux résistances 148 et 149, via un condensateur 155. Une résistance 152′ placée en sortie de l'amplificateur 150 est reliée au point commun aux résistances 145, 146 du transmetteur d'impulsions 32 de manière que l'entrée de signal à traiter d'un échantillonneur 33 qui est reliée à ce point commun puisse être alternativement attaquée soit par les implusions transmises en mode différentiel par le filtre 31, soit par les impulsions transmises en mode commun par le transmetteur 32.

L'échantillonneur 33 est activé par un signal périodique que lui fournit un classique circuit d'horloge 34, La fréquence du signal d'horloge HE servant à l'échantillonnage des signaux fournis par le filtre 31 ou par l'intermédiaire du transmetteur d'impulsions 32 est établie à une valeur FE choisie égale à Ft+V+ε, V étant égal à la variation de fréquence admise à l'émission sur la fréquence Ft et ε une valeur d'erreur.

Ainsi dans une forme de réalisation où la fréquence Ft des signaux est de 12 kHz, la fréquence FE choisie est par exemple de 12170Hz, l'erreur admise étant de 70 Hz.

Ce signal est aussi utilisé si la fréquence des impulsions de taxation susceptibles d'être reçues est de 50 Hz. L'échantillonneur fournit donc un signal de sortie à la fréquence image V+ε, soit dans l'exemple proposé à la fréquence de 170Hz, d'où la fréquence incidente Ft est pratiquement exclue.

Le signal de fréquence 50Hz alternativement fourni par le transmetteur d'impulsions 32 n'est pratiquement pas atténué par l'échantillonnage à la fréquence FE et se retrouve donc en sortie de l'échantillonneur 33.

Le signal échantillonné obtenu qui est classiquement réinjecté dans l'échantillonneur 33, est aussi appliqué en entrée d'un filtre passe-bande 35, via une résistance d'entrée 157.

Ce filtre passe-bande 35 est choisi passant pour une bande égale à 2V+ε pour transmettre tant les signaux à fréquence image V+ε que ceux à fréquence 50 Hz; il n'a pas à être très sélectif dans la mesure où les différences entre la fréquence à détecter et les fréquences à éliminer sont beaucoup plus significatives à même niveau pour les fréquences basses en sortie d'échantilloneur 33 que pour les fréquences moyennes présentées sur les fils de ligne téléphonique 2 et en sortie du filtre d'entrée 31. Ce filtre 35 comporte ici une cellule formée par une résistance 157 en série avec une résistance 158 entre deux condensateurs 159 et 160 connectés chacun au potentiel de masse, cette cellule attaque l'entrée non-inverseuse d'un amplificateur opérationnel 161.

La sortie de cet amplificateur 161, qui est classiquement rebouclée d'une part sur son entrée inverseuse et d'autre part au point commun entre résistances 157 et 158 par un condensateur 162, attaque un détecteur de niveau 36.

Un simple détecteur de niveau 36 relié en sortie du filtre passe-bande 35 suffit pour déterminer la présence ou non d'un signal, situé dans la bande passante de ce filtre et réputé correspondre de ce fait à un signal caractéristique de taxation que le détecteur 36 traduit par un signal logique binaire TX.

Le détecteur 36 est organisé autour d'un amplificateur opérationnel 163 recevant le signal de sortie de l'amplificateur 161 sur son entrée non-inverseuse par l'intermédiaire d'un circuit composé d'un condensateur 164, une grande résistance 165 relie classiquement cette entrée non-inverseuse au potentiel de masse, alors que l'entrée inverseuse est relié au point commun d'un diviseur à résistances 166,167 connectées entre masse et potentiel d'alimentation +V1.

Le signal de sortie de l'amplificateur 163 est ensuite appliqué par un montage de mise en forme 168 des impulsions de taxe sous forme binaire en vue de leur envoi par la liaison de transmission TX vers le circuit de signalisation desservant le joncteur 1.

Ce montage comporte par exemple, deux amplificateurs opérationnels 169,170 en série, le premier a une entrée inverseuse au potentiel de masse et une entrée non-inverseuse reliée d'une part à un potentiel négatif -V1 par un circuit à condensateur 171 et résistance 172 en parallèle et d'autre part à la sortie de l'amplificateur 163 par une diode 173 en direct. Une diode 174 en inverse relie la sortie de l'amplificateur 169 à l'entrée inverseuse de l'amplificateur 170 qui est reliée d'une part par un condensateur 176 au potentiel négatif -V1, d'autre part par une résistance 175 au potentiel +V1, alors que l'entrée non-inverseuse de cet amplificateur 170 est relié au potentiel de masse.

## Revendications

1. Joncteur de ligne réseau analogique, pour installation téléphonique de type privé, comportant une interface de ligne composée d'un boucleur (20), d'un détecteur d'appel (19) et éventuellement d'un détecteur de taxe (18) connectés en parallèle aux deux fils (A, B) d'une ligne réseau téléphonique (2), analogique, via un circuit de protection (17), ainsi qu'un circuit cofidec (23) et un détecteur de tonalités (24) connectés en parallèle, via un circuit adaptateur d'impédance convertisseur deux fils/quatre fils (21) relié par un transformateur (22) au circuit de protection (17) au travers du boucleur, le boucleur comportant un détecteur (57) de polarité du courant de ligne et un circuit de commande de bouclage de ligne (74), caractérisé en ce que
- le boucleur (20) comporte en outre un pont redresseur à diodes (56) connecté aux fils (A, B) de ligne (2), en aval du dispositif de protection,
- le détecteur de polarité de courant de ligne comporte une première boucle reliant le fil (B) à la borne alimentée négative du pont redresseur (56) par une diode d'un premier photocoupleur (57) dont la cathode est reliée à la dite borne alimentée négative et par une seconde diode (58) connectée par sa cathode au fil (B) et par son anode à celle de la diode du photocoupleur, et une seconde boucle composée d'une résistance (59) qui est reliée à la borne alimentée positive du pont (56) et qui alimente un montage Darlington dont les deux transistors (60, 61) ont leurs collecteurs interconnectés par la diode du photocoupleur, le transistor de ce photocoupleur fournissant un signal caractéristique (IB), dit d'inversion, de type binaire,
- le circuit de commande de bouclage de ligne comporte un second photocoupleur (74) recevant les signaux binaires de commande (BC) par sa diode et contrôlant par son transistor et ledit montage Darlington ledit bouclage de ligne.

2. Joncteur de ligne réseau analogique, selon la revendication 1 caractérisé en ce que le boucleur comporte un montage de régulation de courant de boucle comportant un transitor (64), de type PNP, relié par son émetteur à la borne alimentée positive du pont redresseur (56), par son collecteur à la base du premier transistor (60) du montage Darlington, via une résistance (76) et par sa propre base au collecteur du transistor 61, via deux résistances (65,66) en série.

3. Joncteur de ligne réseau analogique, selon la revendication 2 caractérisé en ce que le boucleur comporte une résistance additionnelle (67) insérée entre la borne alimentée positive du pont (56) et la base du transistor (64) de régulation de boucle pour augmenter la valeur de régulation du courant de ligne.

4. Joncteur de ligne réseau analogique, selon la revendication 2 caractérisé en ce que le boucleur comporte un condensateur (68) en série avec une résistance (69) en parallèle sur la résistance additionnelle (67) pour augmenter la valeur du courant de ligne pendant les phases de prise de ligne et de numérotation.

5. Joncteur de ligne réseau analogique, selon la revendication 2 caracterisé en ce que le boucleur comporte un condensateur (73) de blocage des courants basse fréquence dans ledit boucleur en basse impédance, lorsque le courant n'y est pas régulé, ledit condensateur de blocage étant inséré entre la borne positive alimentée du pont redresseur (56) et le collecteur d'un transistor (81), de type NPN, dont la base est reliée à l'émetteur du transistor du second photocoupleur (74) disposé de manière à controler le courant de base du premier transistor (60) du montage Darlington.

6. Joncteur de ligne réseau analogique, selon la revendication 3 caractérisé en ce que le boucleur comporte un transistor (81), de type NPN, pour la mise hors-circuit du condensateur de blocage (73) pendant les phases de numérotation, ledit transistor de mise hors-circuit étant monté en série avec ce condensateur de blocage (73) et ayant sa base reliée à l'émetteur du transistor du second photocoupleur (74), de manière à n'être conducteur que lorsque ce second photocoupleur 74 est lui-même actif.

7. Joncteur de ligne réseau analogique, selon la revendication 3 caractérisé en ce que le boucleur comporte un transistor (82), de type PNP, pour la protection du boucleur contre les surtensions, lorsque la boucle est fermée, ledit transistor de protection mettant en liaison par son collecteur le point commun à une résistance (76) de polarisation de sa propre base et au collecteur du transistor du second photocoupleur (74) avec celui qui est commun à deux résistances (65 et 66) reliant la base du transistor de régulation (64) à l'émetteur du second transistor (61) du montage Darlington, via son propre émetteur.

8. Joncteur de ligne réseau analogique, selon la revendication 1 caractérisé en ce que l'interface de ligne est dotée d'un détecteur d'appel qui, alimenté par un pont redresseur à diodes (44) relié aux fils (A,B) de ligne (2), via un condensateur (45) connecté au fil A, comporte une première maille comprenant une première diode Zener (46) et deux résistances (47,48) alimentées, en série et dans le sens inverse pour la diode, par le courant redressé que fournit le pont (44) et une seconde maille comportant en série, aux bornes de la résistance médiane (47), une seconde diode Zener (49) en série avec la première diode Zener et avec la diode d'un photocoupleur (50) qui est montée en inverse par rapport aux diodes Zener et dont le transistor fournit le signal caractéristique (AP), de type binaire, de détection d'appel.

9. Joncteur de ligne réseau analogique, selon la revendication 1 caractérisé en ce qu'il comporte un détecteur de signaux de tonalité comprenant en entrée un amplificateur (25) à seuil minimum d'entrée dont la sortie est reliée d'une part en entrée d'un filtre passe-bande (26), d'autre part en entrée d'une première cellule de redressement-filtrage (27), une seconde cellulde de redressement-filtrage (28) connectée en sortie du filtre passe-bande et un détecteur de présence à seuil (29) qui est aussi connecté en sortie du filtre passe-bande (26) comme la seconde cellule et qui, lorsqu'il détecte un signal de niveau supérieur au seuil en sortie dudit filtre, autorise une comparaison par un comparateur (30) entre les signaux d'entrée et de sortie du filtre, la présence d'un signal en sortie du filtre d'amplitude supérieure à celle du signal en entrée étant caractéristique de la présence du signal alternatif attendu et se traduisant par un signal de type binaire en sortie de comparateur.

10. Joncteur de ligne réseau analogique, selon la revendication 1 caractérisé en ce qu'il comporte un détecteur d'impulsions de taxation comprenant un filtre d'entrée (31), moyennement sélectif centré sur la très basse fréquence (Ft) des impulsions attendues qui sont transmises en différentiel sur les fils de ligne auxquelles est relié ce filtre, éventuellement au travers du dispositif de protection, un échantillonneur (33) connecté d'une part à la sortie du filtre d'entrée (31) et d'autre à la sortie d'une horloge (34) fournissant un signal (HE) dont la fréquence (FE) est voisine de la valeur (Ft), de manière à fournir en sortie un signal échantilloné, caractéristique, correspondant à la différence entre (FE) et (Ft) lorsqu'une signalisation est reçue, un filtre passe-bande (35) dans la bande duquel le signal caractéristique est inclus, ainsi qu'un détecteur de niveau (36) apte à fournir un signal numérique, de type binaire, suivant la présence ou non d'un signal caractéristique d'une signalisation reçue de niveau supérieur à un seuil prédéterminé en sortie du filtre passe-bande (35).

11. Joncteur de ligne réseau analogique, selon la revendication 7 caractérisé en ce que le détecteur d'impulsions de taxation comporte de plus un transmetteur d'impulsions (32) pour les signalisations transmises en mode commun sur les fils de ligne, le dit transmetteur étant relié d'une part par ses entrées aux fils de ligne (2) et en sortie à l'échantillonneur (33) en parallèle avec le filtre d'entrée (31).

## Patentansprüche

1. Leitungsverbinder für eine analoge Netzleitung in einer Nebenstellen-Telefonanlage, mit einer Leitungsschnittstelle bestehend aus einem Schleifenschalter (20), aus einem Rufsignaldetektor (19) und ggf. einem Gebührenimpulsdetektor (18), die parallel an die beiden Drähte (A, B) einer analogen Telefonnetzleitung (2) über eine Schutzschaltung (17) angeschlossen sind, wobei weiter eine Cofidec-Schaltung (23) und ein Tonsignaldetektor (24) parallelgeschaltet sind und über eine Schaltung (21) zur Impedanzanpassung und zur Zweidraht-Vierdraht-Wandlung angesteuert werden, die über einen Transformator (22) und den Schleifenschalter an die Schutzschaltung (17) angeschlossen ist, wobei der Schleifenschalter einen Detektor (57) zur Erfassung der Polarität des Leitungsstroms und eine Steuerschaltung zur Schleifenbildung der Leitung (74) enthält, dadurch gekennzeichnet, daß
- der Schleifenschalter (20) außerdem eine Diodengleichrichterbrücke (56) aufweist, die an die Drähte (A, B) der Leitung (2) hinter der Schutzvorrichtung angeschlossen ist,
- der Detektor zur Erfassung der Strompolarität auf der Leitung eine erste Schleife aufweist, die den Draht (B) mit der negativen gespeisten Klemme der Gleichrichterbrücke (56) über eine Diode eines ersten Fotokopplers (57), deren Kathode an die negative gespeiste Klemme angeschlossen ist, und über eine zweite Diode (58) verbindet, deren Kathode mit dem Draht (B) und deren Anode mit der Anode der Diode des Fotokopplers verbunden ist, wobei dieser Detektor weiter eine zweite Schleife enthält, die aus einem mit der positiven gespeisten Klemme der Brücke (56) verbundenen Widerstand (59) besteht, die eine Darlington-Schaltung speist, deren Kollektoren der beiden Transistoren (60, 61) über die Diode des Fotokopplers miteinander verbunden sind, wobei der Transistor dieses Fotokopplers ein binäres Signal (IB) liefert, das für die Polaritätsumkehr charakteristisch ist,
- die Schaltung zur Schleifensteuerung der Leitung einen zweiten Fotokoppler (74) aufweist, der die binären Steuersignale (BC) über seine Diode empfängt und mit seinem Transistor und der Darlington-Schaltung die Schleifenbildung der Leitung steuert.

2. Leitungsverbinder für eine analoge Netzleitung nach Anspruch 1, dadurch gekennzeichnet, daß der Schleifenschalter eine Schaltung zur Regelung des Schleifenstroms aufweist, die einen PNP-Transistor (64) enthält, dessen Emitter mit der positiven gespeisten Klemme der Gleichrichterbrücke (56), dessen Kollektor mit der Basis des ersten Transistors (60) der Darlington-Schaltung über einen Widerstand (76) und dessen Basis mit dem Kollektor des Transistors (61) über zwei Widerstände (65, 66) in Reihe verbunden ist.

3. Leitungsverbinder für eine analoge Netzleitung nach Anspruch 2, dadurch gekennzeichnet, daß der Schleifenschalter einen zusätzlichen Widerstand (67) aufweist, der zwischen die positive gespeiste Klemme der Brücke (56) und die Basis des Transistors (64) zur Regelung des Schleifenstroms eingefügt ist, um den Wert der Regelung des Leitungsstroms zu erhöhen.

4. Leitungsverbinder für eine analoge Netzleitung nach Anspruch 2, dadurch gekennzeichnet, daß der Schleifenschalter einen Kondensator (68) in Reihe mit einem Widerstand (69) parallel zu dem zusätzlichen Widerstand (67) besitzt, um den Wert des Leitungsstroms während der Belegungs- und Nummernwahlphasen der Leitung zu erhöhen.

5. Leitungsverbinder für eine analoge Netzleitung nach Anspruch 2, dadurch gekennzeichnet, daß der Schleifenschalter einen Kondensator (73) zur Sperrung der Ströme niedriger Frequenz in der Schleife bei niedriger Impedanz aufweist, wenn der Strom dort nicht geregelt ist, wobei dieser Kondensator zwischen die positive gespeiste Klemme der Gleichrichterbrücke (56) und den Kollektor eines NPN-Transistors (81) eingefügt ist, dessen Basis mit dem Emitter des Transistors des zweiten Fotokopplers (74) verbunden ist, der so angeordnet ist, daß er den Basisstrom des ersten Transistors (60) der Darlington-Schaltung regelt.

6. Leitungsverbinder für eine analoge Netzleitung nach Anspruch 3, dadurch gekennzeichnet, daß der Schleifenschalter einen NPN-Transistor (81) zur Neutralisierung des Blockierkondensators (73) während der Nummernwahlphasen aufweist, wobei dieser Transistor in Reihe mit diesem Blockierkondensator (73) liegt und mit seiner Basis an den Emitter des Transistors des zweiten Fotokopplers (74) angeschlossen ist, so daß er nur leitend wird, wenn der zweite Fotokoppler (74) seinerseits aktiv ist.

7. Leitungsverbinder für eine analoge Netzleitung nach Anspruch 3, dadurch gekennzeichnet, daß der Schleifenschalter einen PNP-Transistor (82) zum Schutz des Schleifenschalters gegen Überspannungen aufweist, wenn die Schleife geschlossen ist, wobei dieser Schutztransistor mit seinem Kollektor den gemeinsamen Punkt eines Basis-Vorspannungswiderstands (76) und des Kollektors des Transistors des zweiten Fotokopplers (74) mit dem Punkt in Verbindung bringt, der zwei Widerständen (65 und 66) gemeinsam ist, welche die Basis des Regeltransistors (74) mit dem Emitter des zweiten Transistors (61) der Darlington-Schaltung über seinen eigenen Emitter verbinden.

8. Leitungsverbinder für eine analoge Netzleitung nach Anspruch 1, dadurch gekennzeichnet, daß die Leitungsschnittstelle einen Rufsignaldetektor aufweist, der von einer an die Drähte (A, B) der Leitung (2) über einen mit dem Draht (A) verbundenen Kondensator (45) angeschlossenen Diodengleichrichterbrücke gespeist wird und eine erste Schleife mit einer ersten Zenerdiode (46) und zwei Widerstände (47, 48), die in Reihe und bezüglich der Diode in Sperrichtung von dem von der Brücke gelieferten gleichgerichteten Strom gespeist werden, sowie eine zweite Schleife aufweist, die in Reihe an den Klemmen des mittleren Widerstands (47) eine zweite Zenerdiode (49) in Reihe mit der ersten Zenerdiode und mit der Diode eines Fotokopplers (50) enthält, die in Gegenrichtung bezüglich der Zenerdioden geschaltet ist, und deren Transistor das Binärsignal (AP) liefert, das für die Ruferfassung charakteristisch ist.

9. Leitungsverbinder für eine analoge Netzleitung nach Anspruch 1, dadurch gekennzeichnet, daß er einen Tonsignaldetektor enthält, der am Eingang einen Mindestschwellwertverstärker (25) enthält, dessen Ausgang einerseits mit dem Eingang eines Bandpaßfilters (26) und andererseits mit dem Eingang einer ersten Gleichrichtungs- und Filterzelle (27) verbunden ist, wobei eine zweite Gleichrichtungs- und Filterzelle (28), die an den Ausgang des Bandpaßfilters angeschlossen ist, und ein Detektor für das Vorliegen einer Schwelle (29) vorgesehen sind, der auch an den Ausgang des Bandpaßfilters (26) wie die zweite Zelle angeschlossen ist und der bei Erfassung eines Signals eines Pegels oberhalb der Schwelle am Ausgang des Filters in einem Komparator (30) einen Vergleich zwischen den Eingangs- und Ausgangssignalen des Filters zuläßt, so daß das Vorliegen eines Signals am Ausgang des Filters mit einer Amplitude größer als am Eingang für das Vorliegen des erwarteten Wechselstromsignals charakteristisch ist und zu einem Binärsignal am Ausgang des Komparators führt.

10. Leitungsverbinder für eine analoge Netzleitung nach Anspruch 1, dadurch gekennzeichnet, daß er einen Gebührenimpulsdetektor aufweist, der ein nur mäßig selektives Eingangsfilter (31) aufweist, das auf die sehr niedrige Frequenz (Ft) der erwarteten Impulse zentriert ist, die im Differentialmodus auf den Leitungsdrähten, an die das Filter angeschlossen ist, ggf. über eine Schutzschaltung übertragen werden, wobei ein Tast-kreis (33), der einerseits mit dem Ausgang des Eingangsfilters (31) und andererseits mit dem Ausgang eines Taktgebers (34) verbunden ist, ein Signal (HE) mit einer Frequenz (FE) nahe dem Wert (Ft) liefert, so daβ am Ausgang ein getastetes charakteristisches Signal geliefert wird, das der Differenz zwischen (FE) und (Ft) entspricht, wenn eine Signalisierung empfangen wird, wobei ein Bandpaßfilter (35), in dessen Bandbreite das charakteristische Signal enthalten ist, sowie ein Pegeldetektor (36) vorgesehen sind, der ein digitales Signal vom binären Typ liefern kann, wenn ein charakteristisches Signal einer empfangene Signalisierung mit einem einen bestimmten Schwellwert übersteigenden Pegel am Ausgang des Bandpaßfilters (35) vorliegt.

11. Leitungsverbinder für eine analoge Netzleitung nach Anspruch 7, dadurch gekennzeichnet, daβ der Gebührenimpulsdetektor außerdem eine Impulsübertrager (32) für Signalisierungen enthält, die im Gleichtakt auf den Drähten der Leitung übertragen werden, wobei dieser Übertrager einerseits mit seinen Eingängen an die Drähte der Leitung (2) und andererseits ausgangsseitig an den Tastkreis (33) parallel mit dem Eingangsfilter (31) angeschlossen ist.

## Claims

1. Exchange line interface circuit for connecting a private telephone installation to an analogue telephone network line, comprising a line interface including a transmission bridge (20), a ringing detector (19) and an optional charging pulse detector (18) connected in parallel to the two wires (A, B) of an analogue telephone network line (2) via a protection circuit (17), together with a cofidec circuit (23) and a tone detector (24) connected in parallel via an impedance matching and two-wire/four-wire converter circuit (21) connected by a transformer (22) to the protection circuit (17) via the transmission bridge, the transmission bridge comprising a line current polarity detector (57) and a line loopback control circuit (74), characterised in that:
- the transmission bridge (20) further comprises a diode rectifier bridge (56) connected to the wires (A, B) of the line (2) on the output side of the protection device,
- a line current polarity detector comprising a first loop connecting the wire (B) to the negative input terminal of the rectifier bridge (56) via a diode of a first optocoupler (57) the cathode of which is connected to said negative input terminal and via a second diode (58) with its cathode connected to the wire (B) and its anode connected to the anode of the diode of the optocoupler and a second loop comprising a resistor (59) connected to the positive input terminal of the bridge (56) and which feeds a Darlington circuit in which the collectors of the two transistors (60, 61) are connected together by the diode of the optocoupler, the transistor of the optocoupler supplying a characteristic inversion binary signal (IB),
- the line loopback control circuit comprising a second optocoupler (74) receiving binary control signals (BC) via its diode and controlling line loopback via its transistor and said Darlington circuit.

2. Exchange line interface circuit for analogue telephone network lines according to claim 1 characterised in that the transmission bridge comprises a loop current regulator circuit comprising a PNP transistor (64) with its emitter connected to the positive input terminal of the rectifier bridge (56), its collector connected to the base of the first transistor (60) of the Darlington circuit via a resistor (76) and its base connected to the collector of the transistor (61) via two resistors (65, 66) in series.

3. Exchange line interface circuit for analogue telephone network lines according to claim 2 characterised in that the transmission bridge comprises a further resistor (67) between the positive input terminal of the rectifier bridge (56) and the base of the loop regulation transistor (64) to increase the value of the regulated line current.

4. Exchange line interface circuit for analogue telephone network lines according to claim 2 characterised in that the transmission bridge comprises a capacitor (68) in series with a resistor (69) in parallel with the additional resistor (67) to increase the line current during the line seizure and dialling phases.

5. Exchange line interface circuit for analogue telephone network lines according to claim 2 characterised in that the transmission bridge comprises a capacitor (73) for blocking low-frequency currents in said transmission bridge under low-impedance conditions, when the current therein is not regulated, said blocking capacitor being connected between the positive input terminal of the rectifier bridge (56) and the collector of an NPN transistor (81) the base of which is connected to the emitter of the transistor of the second optocoupler (74) adapted to control the base current of the first transistor (60) of the Darlington circuit.

6. Exchange line interface circuit for analogue telephone network lines according to claim 3 characterised in that the transmission bridge comprises an NPN transistor (81) for bypassing the blocking capacitor (73) during the dialling phase, said bypass transistor being connected in series with the blocking capacitor (73) and having its base connected to the emitter of the transistor of the second optocoupler (74) so as to be turned on only if the second optocoupler (74) is active.

7. Exchange line interface circuit for analogue telephone network lines according to claim 3 characterised in that the transmission bridge comprises a PNP transistor (82) for protecting the transmission bridge against overvoltages when the loop is closed, said protection transistor selectively connecting by way of its collector the common point of a resistor (76) biasing its base and the collector of the transistor of the second optocoupler (74) to the point common to two resistors (65 and 66) connecting the base of the regulating transistor (64) to the emitter of the second transistor (61) of the Darlington circuit, by way of its emitter.

8. Exchange line interface circuit for analogue telephone network lines according to claim 1 characterised in that the line interface includes a ringing detector fed by a diode rectifier bridge (44) connected to the wires (A, B) of the line (2) via a capacitor (45) connected to one wire (A) and which comprises a first loop comprising a first zener diode (46) and two resistors (47, 48) through which flows in series and in the reverse bias direction in the case of the diode the rectified current supplied by the rectifier bridge (44) and a second loop comprising in series, shunting the median resistor (47), a second zener diode (49) in series with the first zener diode and with the diode of an optocoupler (50) which is connected in the opposite conduction direction to the zener diodes and the transistor of which supplies a characteristic ringing detection binary signal (AP).

9. Exchange line interface circuit for analogue telephone network lines according to claim 1 characterised in that it comprises a tone signal detector comprising at its input a minimum input threshold amplifier (25) the output of which is connected to the input of a bandpass filter (26) and to the input of a first rectifier-filter (27), a second rectifier-filter (28) connected to the output of the bandpass filter and a threshold presence detector (29) which is also connected to the output of the bandpass filter (26), as is the second rectifier-filter, and which, if it detects a signal with a level above the threshold at the output of said filter, authorises comparison by a comparator (30) of the filter input and output signals, the presence of a filter output signal having an amplitude higher than that of the input signal characterising the presence of the expected alternating current signal and producing a binary signal at the comparator output.

10. Exchange line interface circuit for analogue telephone network lines according to claim 1 characterised in that it comprises a charging pulse detector comprising an input filter (31) of moderate selectivity centered on the very low frequency (Ft) of the expected pulses which are transmitted differentially on the line wires to which the filter is connected, optionally via the protection device, a sample and hold circuit (33) connected to the output of the input filter (31) and to the output of a clock (34) supplying a signal (HE) whose frequency (FE) is near said frequency (Ft) so as to provide at the output a characteristic sampled signal representative of the difference between the frequencies (FE and Ft) when signalling is received, a bandpass filter (35) whose passband includes the characteristic signal, and a level detector (36) adapted to supply a binary digital signal according to whether or not there is present at the output of the bandpass filter (35) a signal characteristic of signalling received at a level higher than a predetermined threshold.

11. Exchange line interface circuit for analogue telephone network lines according to claim 7 characterised in that the charging pulse detector further comprises a pulse sender (32) for signalling transmitted in common mode on the line wires, said sender having its inputs connected to the wires of the line (2) and its outputs connected to the sample and hold circuit (33) in parallel with the input filter (31).
